(19) Europäisches Patentamt
European Patent Office
Office européen des brevets

(11) EP 0 924 222 A1

# (12) EUROPÄISCHE PATENTANMELDUNG

(43) Veröffentlichungstag:
**23.06.1999 Patentblatt 1999/25**

(51) Int. Cl.[6]: **C08F 2/24**, C08F 251/00, C08F 222/40, D21H 17/34

(21) Anmeldenummer: **98123210.1**

(22) Anmeldetag: **05.12.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.12.1997 DE 19756372**

(71) Anmelder:
**Bayer Aktiengesellschaft**
**51368 Leverkusen (DE)**

(72) Erfinder:
- **Sackmann, Günter Dr.**
  **51379 Leverkusen (DE)**
- **Wenz, Eckhard Dr.**
  **50679 Köln (DE)**
- **König, Joachim Dr.**
  **51519 Odenthal (DE)**
- **Jansen, Bernhard Dr.**
  **51061 Köln (DE)**
- **Roick, Thomas Dr.**
  **51375 Leverkusen (DE)**
- **Thiele, Bernd**
  **51519 Odenthal (DE)**
- **Kijlstra, Johan Dr.**
  **51375 Leverkusen (DE)**

## (54) Verbesserte Leimungsmittel für Papier

(57) Die neuen wäßrigen Emulsionspolymerisate, die erhältlich durch radikalisch initiierte Polymerisation von mindestens einem Monomeren in Gegenwart von abgebauter Stärke und mindestens einem polymeren Emulgator aus der Reihe der sulfonsäuregruppenhaltigen Maleinsäureanhydrid-Copolymerisate und/oder der sulfonsäuregruppenhaltigen Oligourethane mit verzweigter Molekülstruktur eignen sich hervorragend als Oberflächenleimungsmittel für Papier und papierähnliche Materialien.

EP 0 924 222 A1

**Beschreibung**

Gegenstand der vorliegenden Erfindung sind wässrige Emulsionspolymerisate, deren Verwendung als Leimungsmittel zur Oberflächenleimung sowie Verfahren zur Herstellung der Emulsionspolymerisate.

Aus dem Stand der Technik sind bereits Leimungsmittel auf Basis wäßriger Emulsionspolymerisate bekannt, die aber nicht hinsichtlich aller an sie gestellten Anforderungen zufriedenstellend sind.

Die japanische Patentanmeldung JP-A 58/115196 beschreibt die Verwendung wässriger Dispersionen von Pfropfcopolymerisaten von Acrylaten und Styrol auf Stärke als Leimungsmittel für Papier, und in den Europäischen Patentameldungen EP-A 257412 sowie EP-A 276770 sind Pfropfcopolymerisate von Acrylaten und Acrylnitril auf Stärke beansprucht, die ebenfalls in Form feinteiliger wässnger Dispersionen zur Papierleimung eingesetzt werden.

In EP-A 276 770 ist außerdem beschrieben, daß durch den Zusatz von 0 bis 3,0 Gew.-%, bezogen auf die Summe der eingesetzten Monomeren, an niedermolekularen Emulgatoren, wie z.B. Natriumalkylsulfonat, Natriumlaurylsulfat oder Natriumdodecylbenzolsulfonat, die dort beanspruchten Emulsionen stabilisiert werden können. Als nachteilig im Falle eines solchen Emulgatorzusatzes wird jedoch angeführt, daß dadurch die Leimung verschlechtert und bei der Anwendung der Leimungsmittel oft eine starke Schaumbildung auftritt.

Andererseits sind aus EP-A 331 066 und EP-A 400 410 feinteilige Leimungsmitteldispersionen mit ausgezeichneten anwendungstechnischen Eigenschaften bekannt, die durch Emulsionspolymerisation von Monomeren, wie z.B. Acrylnitril, Butylacrylat oder Styrol, in Gegenwart von Sulfonsäuregruppen enthaltenden polymeren anionischen Emulgatoren, im Falle der EP-A 331 066 auf Basis von Maleinsäureanhydrid-Copolymerisaten und im Falle der EP-A 400 410 auf Basis sternförmig verzweigter Polyurethane erhalten werden. Solche Leimungsmitteldispersionen zeigen besonders auf neutralen und kreidehaltigen Papieren ausgezeichnete anwendungstechnische Eigenschaften. Allerdings sind sie gegenüber zwei- und dreiwertigen Kationen, wie z.B. $Ca^{(2+)}$ oder $Al^{3+}$, von geringer Stabilität. Dies kann unter ungünstigen Bedingungen zu Ausfällungen auf der Leimpresse und damit zu einer Beeinträchtigung ihrer Leimungswirkung führen.

Übertaschenderweise wurde nun gefunden, daß Emulsionspolymerisate auf Basis von Stärke-Pfropfcopolymerisaten und polymeren Emulgatoren als Leimungsmittel hervorragend geeignet sind, die über verbesserte anwendungstechnische Eigenschaften bei gleichzeitig hoher Dispersionsstabilität gegenüber zweiwertigen Kationen sowie äußerst geringer Tendenz zur Schaumbildung bei ihrer Anwendung verfügen.

Die vorliegende Erfindung betrifft wässrige Emulsionspolymerisate, erhältlich durch radikalisch initiierte Polymerisation von mindestens einem Monomeren in Gegenwart von abgebauter Stärke und mindestens einem polymeren Emulgator aus der Reihe der sulfonsäuregruppenhaltigen Maleinsäureanhydrid-Co- und/oder -Terpolymerisate und/oder der sulforsäuregruppenhaltigen Oligourethane mit verzweigter Molekülstruktur.

Als polymere Emulgatoren aus der Reihe der sulfonsäuregruppenhaltigen Maleinsäureanhydrid-Co- und Terpolymerisate kommen insbesondere solche der Formel (I)

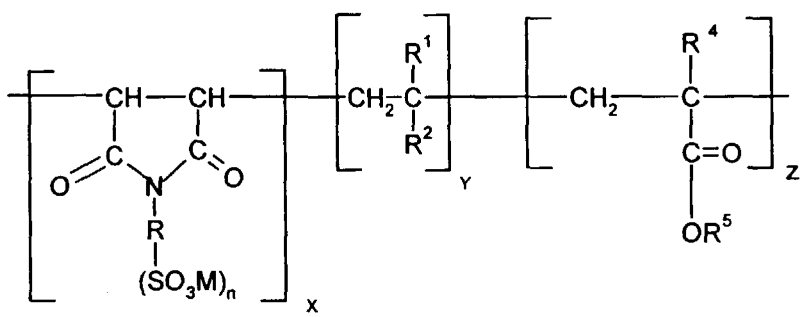

(I)

worin

M für einen kationbildenden Rest, vorzugsweise für H, Na, K, $NH_4$, $R^3NH_3$ steht,

n für 1 der 2 steht,

R für einen aliphatischen Rest mit 1 bis 10 C-Atomen oder einen aromatischen Rest mit 6 bis 10 C-Atomen, bevorzugt für einen von einem $C_1$ -$C_4$-Alkan oder von Benzol, Methylbenzol oder Naphthalin abgeleiteten Rest, insbesondere für $-CH_2CH_2-$, steht,

$R^1$ für H oder $CH_3$ steht,

$R^2$ für H, $C_1$-$C_6$-Alkyl, vorzugsweise $-CH_3$, $-C_2H_5$, $-C_4H_9$, $-CH_2-C(CH_3)_3$, oder Phenyl steht,

$R^3$ für einen Kohlenwasserstoffrest eines Amins steht,

$R^4$ für $CH_3$ oder H steht,

$R^5$ für $CH_3$ oder $C_2H_5$ steht und

x,y,z so gewählt werden, daß das gewichtsmittlere Molekulargewicht ($\overline{M}_w$) der Polymerisate (I) 5 000 bis 500 000, vorzugsweise 10 000 bis 200 000, beträgt und das Verhältnis von x:y:z= 1:1:0 bis 1:3:0,5 ist,

in Frage.

Die Polymerisate (I), worin das Verhältnis von x:y:z = 1:1:0 ist, sind bekannt (vgl. z.B. DE-A 3 344 470, EP-A 0 331 066) oder sie können wie in EP-A 0 331 066 beschrieben hergestellt werden.

Die Polymerisate (I), worin das Verhältnis von x:y:z = 1:1:0,1 bis 1:3:0,5 ist, sind neu und ebenfalls Gegenstand der vorliegenden Erfindung. Die neuen Polymerisate (I) können in Analogie zu den bekannten Polymerisaten (I) hergestellt werden.

Als polymere Emulgatoren aus der Reihe der sulfonsäuregruppenhaltigen Oligourethane mit verzweigter Molekülstruktur eignen sich solche besonders, die im statistischen Mittel pro Molekül mindestens 2,2 endständigen Sulfonsäuregruppen aufweisen.

Die Oligourethane weisen ein aus der Stöchiometrie der Ausgangsmaterialien berechenbares mittleres Molekulargewicht von unter 30 000, vorzugsweise von 1 500 bis 20 000, auf. Die Oligourethane weisen eine verzweigte Moleküstruktur auf. Dies bedeutet, daß bei ihrer Herstellung Aufbaukomponenten mitverwendet werden, die im Sinne der Isocyanat-Additionsreaktion höher als difunktionell sind. Außerdem weisen die Oligourethane endständig eingebaute Sulfonatgruppen auf, wobei im statistischen Mittel pro Molekül mindestens 2,2 derartige endständige Sulfonatgruppen vorliegen.

Vorzugsweise weisen die Oligourethane einen Gehalt an endständig eingebauten ionischen Gruppen von 7,3 bis 400, insbesondere von 11 bis 300 Milliäquivalent pro 100 g auf.

Die Herstellung der Oligourethane erfolgt nach den bekannten Methoden der Polyurethanchemie. Ausgangsmaterialien hierfür sind

a) organische Polyisocyanate, vorzugsweise des Molekulargewichtsbereichs 168 bis 1 000;

b) organische Verbindungen mit gegenüber Isocyanatgruppen reaktionsfähigen Gruppen des Molekulargewichtsbereiches 60 bis 10 000, vorzugsweise 62 bis 3 000, und

c) Aufbaukomponenten mit Sulfonsäuregruppen bzw. deren Salze.

Geeignete Polyisocyanate a) sind beispielsweise 4,4'-Diisocyanatodiphenylmethan, 2,4- und/oder 2,6-Diisocyanatotoluol, 4,4'-Diisocyanatodicyclohexylmethan, 1-Isocyanato-3,3,5-trimethyl-5-isocyanatomethylcyclohexan (IPDI), 1,6-Diisocyanatohexan (HDI), Isocyanuratgruppen-aufweisende Polyisocyanate, wie z.B. das im wesentlichen aus N,N',N"-Tris-(6-isocyanatohexyl)-isocyanurat und gegebenenfalls seinen höheren Homologen bestehende, durch Trimerisierung eines Teils der Isocyanatgruppen von HDI erhältliche Polyisocyanat, Urethangruppen-aufweisende Polyisocyanate, wie beispielsweise das Umsetzungsprodukt von 1 mol Trimethylolpropan mit 3 mol IPDI oder mit 3 mol 2,4-Diisocyanatotoluol oder auch Biuretpolyisocyanate, wie beispielsweise das im wesentlichen aus N,N',N"-Tris-(6-isocyanato-hexyl)-biuret und seinen höheren Homologen bestehende Biuretpolyisocyanat auf Basis von HDI. Beliebige Gemische derartiger Polyisocyanate können ebenfalls als Komponente a) bei der Herstellung der Oligourethane verwendet werden. Zu den Aufbaukomponenten a) gehören außerdem beispielsweise a1) Acylharnstoffgruppen der allgemeinen Formel

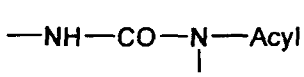

aufweisende Polyisocyanate. Die Herstellung der Aufbaukomponenten a1) erfolgt in Analogie zur Lehre der DE-OS 24

36 741 durch partielle Carbodiimidisierung der Isocyanatgruppen von organischen Polyisocyanaten und Anlagerung von organischen Carbonsäuren an die so hergestellten, Carbodiimid-modifizierten Polyisocyanate.

Typische Beispiele geeigneter Aufbaukomponenten a1) sind Diisocyanate der allgemeinen Formel

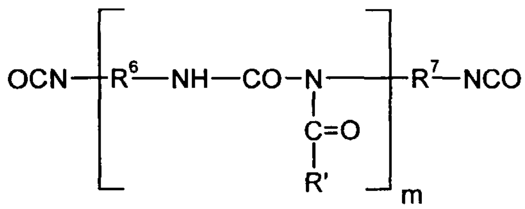

die in der Weise hergestellt werden, daß man in einer ersten Stufe Carbodiimidgruppen von Diisocyanatocarbodiimiden der allgemeinen Formel

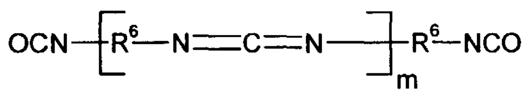

vollständig oder teilweise mit Carbonsäuren der allgemeinen Formel

R'-COOH

gegebenenfalls in Gegenwart eines geeigneten Lösungsmittels bei Temperaturen von 25 bis 100°C reagieren laßt.

In diesen Formeln stehen

R' für einen organischen Rest, vorzugsweise einen gesättigten oder ungesättigten aliphatischen Kohlenwasserstoffrest mit 1 bis 35 C-Atomen, einen Arylrest mit 6 bis 10 C-Atomen oder einen araliphatischen Rest mit 7 bis 10 C-Atomen, wobei bei Vorliegen von mehreren Resten R' im gleichen Molekül nebeneinander unterschiedliche Reste R' vorliegen können,

$R^6$ für einen zweiwertigen, gegebenenfalls Urethan-, Ester- und/oder Ethergruppen aufweisenden Kohlenwasserstoffrest, wie er durch Entfernung der endständigen Isocyanatgruppen aus einem einfachen organischen Diisocyanat oder einem Urethangruppen und gegebenenfalls Ether- oder Estergruppen aufweisenden NCO-Prepolymer erhalten wird, wobei bei Vorliegen von mehreren Resten $R^6$ im gleichen Molekül gleichzeitig auch unterschiedliche, der genannten Definition entsprechende Reste $R^6$ vorliegen können, und

m für eine ganze oder (im statistischen Mittel) gebrochene Zahl von 1 bis 10, vorzugsweise von 1 bis 4.

Die Herstellung der Diisocyanatocarbodiimide ist an sich bekannt und wird z.B. in den US-Patentschriften 28 40 589 und 29 41 966 sowie von P.W.Campbell und K.C. Schmeltz in Journal of Organic Chemistry, 28, 2069 (1963) beschrieben. Besonders schonend und frei von Nebenprodukten lassen sich Diisocyanatocarbodiimide auch durch eine Heterogenkatalyse gemäß den deutschen Offenlegungsschriften 25 04 400 und 25 52 350 herstellen. Die Carbodiimidisierung von Diisocyanaten in Gegenwart sehr geringer Mengen an Phospholinoxid unter anschließender Blokkierung des Katalysators mit Säurechloriden wird in der DE-OS 26 53 120 beschrieben.

Als Aufbaukomponente für die Carbodiimidgruppen aufweisenden Diisocyanate werden bevorzugt aromatische Diisocyanate der oben unter a1) beispielhaft genanten Art eingesetzt.

Geeignete Carbonsäuren der Formel R'-COOH sind beispielsweise Essigsäure, Propionsäure, Hexancarbonsäure, Laurinsäure, Palmitinsäure, Stearinsäure, Benzoesäure, Phenylessigsäure, Acrylsäure, Methacrylsäure, Crotonsäure, 10-Undecensäure, Ölsäure oder Linolsäure. Grundsätzlich ist es auch möglich, andere Monocarbonsäuren einzusetzen, die nicht der oben gemachten Definition von R entsprechen, wie z.B. Chloressigsäure, Cyclohexancarbonsäure, Abietinsäure, 4-Di-methylaminoberzoesäure oder auch Monoester oder Monoamide von Dicarbonsäuren wie Oxalsäure, Malonsäure, Bernsteinsäure, Maleinsäure, Fumarsäure oder Phthalsäure mit einwertigen Alkoholen oder Aminen. Grundsätzlich können auch beliebige Gemische der beispielhaft genannten Säuren der allgemeinen Formel R'-COOH eingesetzt werden. Die Menge der eingesetzten Säuren wird so bemessen, daß pro Mol Carbodiimidgruppen 0,2 bis 1,2, vorzugsweise 0,5 bis 1,2 mol an Carboxylgruppen im Reaktionsgemisch vorliegen.

Bei den Verbindungen b) mit gegenüber Isocyanatgruppen reaktionsfähigen Gruppen handelt es sich vorzugsweise um Verbindungen, die keine (potentiell) hydrophilen Gruppen der obengenannten Art aufweisen, und die mindestens 1, vorzugsweise 2 bis 8, und besonders bevorzugt 2 bis 4, gegenüber Isocyanatgruppen reaktionsfähige Gruppen tragen. Beispiele sind:

b1) die aus der Polyurethanchemie an sich bekannten Polyester- oder Polyetherpolyole, die vorzugsweise ein aus der Funktionalität und dem Hydroxylgruppengehalt berechenbares Molekulargewicht von 400 bis 3 000 aufweisen und die beispielsweise im „Kunststoffhandbuch", Band 7, „Polyurethane", herausgegeben von Dr. Günther Oertel, Carl Hanser-Verlag München, Wien (1983), auf Seiten 42 bis 61 beschrieben sind, und die gegebenenfalls durch Umsetzung mit unterschüssigen Mengen eines Diisocyanats der unter a) beispielhaft genannten Art „vorverlängert" zum Einsatz gelangen können;

b2) mehrwertige Alkohole, die vorzugsweise ein Molekulargewicht von 62 bis 400 und 2 bis 3 Hydroxylgruppen pro Molekül aufweisen, wie z.B. Ethylenglykol, Propylenglykol, 1,4-Butandiol, 1,6-Hexandiol, Trimethylolpropan, Glycerin oder ein Umsetzungsprodukt aus Natriumhydrogensulfit und 4-fach propoxyliertem 2-Buten-1,4-diol:

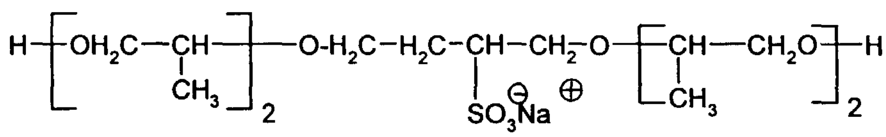

oder Gemische derartiger Kettenverlängerungsmittel bzw. Vernetzer;

b3) organische Polyamine des Molekulargewichtsbereichs 60 bis 4 000, wie z.B. Ethylendiamin, Hexamethylendiamin, Isophorondiamin oder „Aminopolyether" des Molekulargewichtsbereichs 400 bis 4000, wie sie beispielsweise in EP-B 81 701 als Ausgangskomponente bei der Herstellung von Polyurethankunststoffen eingesetzt werden.

Vorzugsweise besteht die Komponente b) aus mindestens einem polyester- oder Polyetherpolyol der unter b1) beispielhaft genannten Art, gegebenenfalls in Abmischung mit mindestens einem niedermolekularen, mehrwertigen Alkohol der unter b2) beispielhaft genannten Art.

Geeignete Aufbaukomponenten c) sind beispielsweise beliebige, mindestens eine gegenüber Isocyanatgruppen reaktionsfähige Gruppe und mindestens eine Sulfonsäure-Gruppe aufweisende Verbindungen. Bevorzugte derartige Aufbaukomponenten sind z.B. 2-Aminoethansulfonsäure, 3-Aminopropansulfonsäure, N-(2-Aminoethyl)aminoethansulfonsäure (AAS) ($H_2N-CH_2-CH_2-NH-CH_2-CH_2-SO_3H$), 2-Amino-benzolsulfonsäure, 3-Aminoberzolsulfonsäure, 4-Aminobenzolsulfonsäure, 4-Amino-1,3-benzoldisulfonsäure, 5-Amino-1,3-benzoldisulfonsäure, 2-Amino-1,4-benzoldisulfonsäure.

Anstelle der beispielhaft genannten Säuren können auch ihre Salze mit anorganischen und organischen Basen, soweit sie mit den anderen Ausgangsmaterialien verträglich sind, eingesetzt werden. Wie bereits weiter oben ausgeführt, besteht die Aufbaukomponente c) ganz oder überwiegend aus Verbindungen, die lediglich eine gegenüber Isocyanatgruppen reaktionsfähige Gruppe aufweisen.

Die Herstellung der erfindungsgemäß einzusetzenden Oligourethane kann beispielsweise so erfolgen, daß man zunächst aus der Polyisocyanatkomponente a) und der Komponente b) unter Einhaltung eines Äquivalentverhältnisses von Isocyanatgruppen zu gegenüber Isocyanatgruppen reaktionsfähigen Gruppen von 1,5:1 bis 30:1, vorzugsweise 2:1 bis 20:1, ein NCO-Gruppen aufweisendes Prepolymer herstellt und dieses anschließend mit den monofunktionellen Aufbaukomponenten c) umsetzt, wobei im allgemeinen ein Äquivalentverhältnis von Isocyanatgruppen des Prepolymeren zu den gegenüber Isocyanatgruppen reaktionsfähigen Gruppen der monofunktionellen Aufbaukomponenten von ca. 0,9:1 bis 1,1:1, vorzugsweise 0,96:1 bis 1,04:1, eingehalten wird. Die Überführung der gegebenenfalls vorliegenden potentiell ionischen Gruppen in ionische Gruppen kann z.B. nach Abschluß der Isocyanat-Additionsreaktionen erfolgen. Die Aufbaukomponenten c) können aber auch direkt in Form ihrer Alkali-, Amin- oder Ammoniumsalze zur Umsetzung mit den Prepolymeren verwendet werden.

Die Salzbildung kann durch Zugabe von Alkalihydroxiden wie NaOH oder KOH, wäßriger Ammoniaklösung, aliphatischen Aminen, wie z.B. Trimethylamin oder Triethylamin, sowie Aminoalkoholen, wie Ethanolamin, Diethanolamin oder Dimethylethanolamin, erfolgen.

Wie bereits oben ausgeführt, werden Art und Mengenverhältnisse der Ausgangskomponenten so gewählt,

daß Oligourethane des obengenannten Molekulargewichtsbereichs resultieren, die im übrigen eine verzweigte Molekülstrukiür aufweisen. Unter einer „verzweigten Molekülstrukur" ist hierbei das Vorliegen von mindestens 0,2, vorzugsweise mindestens 1,0, Verzweigungsstellen pro Molekül im statistischen Durchschnitt zu verstehen. Ein derartiger Verzweigungsgrad kann beispielsweise dadurch sichergestellt werden, daß man bei der Herstellung der Oligourethane eine entsprechende Menge an mindestens trifunktionellen Aufbaukomponenten mitverwendet.

Da bei der Herstellung der Oligourethane, wie dargelegt, die Polyisocyanatkomponente in einem erheblichen Überschuß eingesetzt werden kann, handelt es sich oftmals bei den Oligourethanen um Gemische aus

(i) Umsetzungsprodukten der monofunktionellen Aufbaukomponenten, insbesondere den monofunktionellen Aufbaukomponenten c) mit NCO-Prepolymeren aus den Ausgangskomponenten a) und b) und

(ii) Umsetzungsprodukten der monofunktionellen Aufbaukomponenten, insbesondere den monofunktionellen Aufbaukomponenten c) mit Polyisocyanaten a), die nicht mit Ausgangskomponenten b) abreagiert worden sind.

Der Begriff „Oligourethane" soll auch derartige Gemische umfassen. Die gemachten Angaben bezüglich des Molekulargewichts der Oligourethane beziehen sich im Falle dieser Gemische dementsprechend auf das mittlere Molekulargewicht (Zahlenmittel) der in derartigen Gemischen vorliegenden Einzelkomponenten. Bei den Angaben bezüglich des Verzweigungsgrades und bezüglich der Anzahl der in die Oligourethane endständig eingebauten hydrophilen Gruppen handelt es sich um statistische Mittelwerte. So weist beispielsweise ein Umsetzungsprodukt aus 1 mol Triisocyanat a) mit 3 mol einer monofunktionellen Aufbaukomponente c), welches endständig 3 hydrophile Zentren aufweist, eine Verzweigungsstelle und 3 endständig angeordnete hydrophile Zentren auf. Das Umsetzungsprodukt von (i) 4 Mol monofunktioneller Aufbaukomponente c) mit (ii) 1 mol eines (tetrafunktionellen) Prepolymeren aus 2 mol Triisocyanat und 1 mol Diol b) weist seinerseits im statistischen Mittel 2 Verzweigungsstellen pro Molekül und 4 endständig angeordnete hydrophile Zentren auf. Ein äquitnolares Gemisch aus diesen beiden Komponenten wiese demnach im statistischen Mittel 1,5 Verzweigungsstellen pro Molekül und 3,5 endständig angeordnete hydrophile Zentren auf.

Die genannten Isocyanat-Additionsreaktionen werden im allgemeinen innerhalb des Temperaturbereichs von 20 bis 180°C, vorzugsweise 50 bis 100°C; durchgeführt, wobei lösungsmittelfrei oder in Anwesenheit eines geeigneten Lösungsmittels, wie beispielsweise Aceton, gearbeitet wird. Besonders gut geeignet ist eine Arbeitsweise, derzufolge die NCO-Prepolymeren aus den Komponenten a) und b) lösungsmittelfrei in der Schmelze hergestellt und anschließend in Aceton gelöst und mit den monofunktionellen Aufbaukomponenten umgesetzt werden. Im Anschluß hieran erfolgt dann gegebenenfalls die Überführung der potentiellen ionischen Gruppen in ionische Gruppen, beispielsweise durch Zugabe eines geeigneten Neutralisationsmittels zur acetonischen Lösung und Überführung der acetonischen Lösung in eine waßrige Lösung bzw. Dispersion durch Zugabe von Wasser und Abdestillieren des Acetons.

Selbstverständlich können auch andere Lösungsmittel, wie beispielsweise N,N-Dimethylformamid, N,N-Diethylformamid, Methylethylketon, N-Methylpyrrolidon, Toluol, Ethylacetat oder Gemische derartiger Lösungsmittel verwendet werden, wobei auch auf eine Entfernung der Hilfslösungsmittel verzichtet werden kann, falls die Anwesenheit derartiger Lösungsmittel in den letztendlich erhaltenen erfindungsgemäßen Verfahrensprodukten nicht als störend empfunden wird.

Die Oligourethane wirken bei der Herstellung der erfindungsgemaßen Emulsionspolymerisate als Emulgatoren sowie gegebenenfalls als Pfropfsubstrat. Sie kommen im allgemeinen in Form von 5 bis 70, vorzugsweise 20 bis 50 gew.-%igen wäßrigen, gegebenenfalls kolloidalen Lösungen oder Dispersionen zum Einsatz.

Die Oligourethane weisen aufgrund ihrer speziellen Struktur, ähnlich wie niedermolekulare Emulgatoren, eine sogenannte kritische Mizellkonzentration auf; sie sind somit zur Ausbildung von Mizellstrukuren in wäßrigen Phasen geeignet. Die mittels Oberflächenspannungsmessungen bzw. konduktometrischen Messungen bestimmbaren kritischen Mizellkonzentrationen liegen im allgemeinen bei oberhalb 0,5 g, vorzugsweise bei oberhalb 1,0 g, Oligourethan pro Liter Lösung bzw. Dispersion. Die Konzentrationen stellen somit den unteren Grenzwert dar bezüglich der Konzentration der bei erfindungsgemäßen Verfahren eingesetzten Lösungen bzw. Dispersionen der Oligourethane.

Vorzugsweise werden zur Herstellung der erfindungsgemäßen Emulsionspolymerisate

A) 5 bis 95 Gew.-% mindestens eines Monomeren aus der Reihe Acrylnitril, Methacrylnitril, Carbonsäurevinylester oder eines ungesättigten copolymerisierbaren aliphatischen oder aromatischen Kohlenwasserstoffs
und

B) 5 bis 95 Gew.-% Acryl- und/oder Methacrylsäureester
eingesetzt.

Als radikalisch polymerisierbare Monomere eignen sich insbesondere Styrol, (Meth)acrylsäureester und/oder (Meth)acrylnitril sowie Gemische dieser Monomeren. Beispielhaft seien genannt: Styrol, $\alpha$-Methylstyrol, Acrylnitril,

Methacrylnitril, Vinylacetat, Ethylacrylat, Methylmethacrylat, n-Butylacrylat, i-Butylacrylat, t-Butylacrylat, 2-Ethylhexylacrylat, Methacrylsäureoxipropylester. Besonders bevorzugt werden n-Butylacrylat und/oder t-Butylacrylat, Styrol und Acrylnitril eingesetzt. Ganz besonders bevorzugt kommt ein Gemisch zum Einsatz, das 20 bis 80 Gew.-%, insbesondere 30 bis 70 Gew.-% mindestens eines Butylacrylates, vorzugsweise n-Butylacrylat und/oder t-Butylacrylat und 80 bis 20 Gew.-%, insbesondere 70 bis 30 Gew.-% Styrol und/oder Acrylnitril enthält.

Als Starke kommen native Stärken wie Kartoffel-, Weizen-, Mais, Reis- oder Tapiokastärke in Betracht, wobei Kartoffelstärke bevorzugt ist. Bevorzugt werden Stärketypen mit einem Gehalt an Amylopektin von 80 % und höher eingesetzt. Besonders bevorzugt ist Kartoffelstärke mit einem Amylopektingehalt >95%.

Ebenso können chemisch modifizierte Stärken wie Hydroxyethyl- oder Hydroxypropylstärken eingesetzt werden oder auch Starken, die anionische Gruppen enthalten wie z.B. Phosphatstärke oder auch kationische Starken, die quarternäre Ammoniumgruppen enthalten.

Die genannten Stärketypen werden einem oxidativen, thermischen, sauren oder enzymatischen Abbau unterworfen. Bevorzugt ist ein oxidativer Abbau der Stärke. Zum Abbau geeignet sind Oxidationsmittel wie Hypochlorit, Peroxodisulfat oder Wasserstoffperoxid oder auch Kombinationen, die bevorzugt nacheinander eingesetzt werden, um das gewünschte Molgewicht der Stärke einzustellen. Besonders bevorzugt ist ein Stärkeabbau mit Hypochlorit, wie er üblicherweise zur Verbesserung der Löseeigenschaften der Stärke durchgeführt wird, und ein weiterer Abbau mit z.B. Wasserstoffperoxid.

Bevorzugt weisen die abgebauten Stärken ein mittleres Molgewicht $M_n$ von 500 bis 10 000 auf, das einerseits eine gute Dispergierung der Emulsionspolymerisate gewährleistet und andererseits eine vorzeitige Vernetzung und Ausfällung des Polymerisationsansatzes vermeidet.

Die Polymerisation wird in der Regel so durchgeführt, daß zu der wässrigen Lösung der abgebauten Stärke 1 bis 20 Gew.-%, bezogen auf die Stärke, eines Sulfonsäuregruppen enthaltenden polymeren anionischen Emulgators auf Basis von Maleinsäureanhydrid-Copolymerisaten und/oder von verzweigten Oligourethanen zugesetzt werden. Diese polymeren Emulgatoren sind bereits aus den europäischen Patentanmeldungen mit den Nummern 331 066 und 400 410 bekannt, wo auch ihre Herstellung in mehreren Beispielen detailliert beschrieben ist. Zu dieser Mischung aus abgebauter Stärke und anionischem polymerem Emulgator gibt man das Monomerengemisch aus den Monomeren A) und B) sowie den Radikalstarter. Als Radikalstarter eignen sich wasserlösliche Initiatoren, z.B. Persulfate wie Natrium-, Kaliumoder Ammoniumperoxodisulfat, Wasserstoffperoxid oder auch Redoxsysteme, die eine Kombination aus wasserlöslichen Initiatoren und reduzierenden Komponenten, wie z.B. Natrium-formaldehydsulfoxylat, Natriumdisulfit, Natriumdithionit oder Eisen(II)sulfat, darstellen. Zur Erreichung einer hohen Pfropfausbeute und zur Erzielung besonders feinteiliger Dispersionen ist das Redoxsystem aus Wasserstoffperoxid und Eisen(II)sulfat besonders bevorzugt.

Verwendet werden können in Wasser schwerlösliche organische Peroxide wie t-Butylhydroperoxid oder Acetylcyclohexylsulfonylperoxid, die jedoch nur grobteilige Dispersionen mit niedriger Pfropfausbeute liefern und die deshalb alleine eingesetzt weniger geeignet sind.

Übertaschenderweise besonders geeignet ist jedoch die Kombination eines wasserlöslichen Redoxsystems wie Wasserstoffperoxid und Eisen(II)sulfat mit einem schwerlöslichen organischen Peroxid wie t-Butylhydroperoxid, die nacheinander eingesetzt werden. In diesem Fall polymerisiert man zunächst mit Wasserstoffperoxid und Eisen(II)sulfat mit hoher Pfropfausbeute bis zu einem Umsatz von ca 95% und gibt anschließend zur Nachaktivierung t-Butylhydroperoxid zu, wobei ein Umsatz >99% und ein Restmonomergehalt <100 ppm erreicht und auf eine Entmonomerisierung verzichtet werden kann. Bei konventionellen Polymerisationsverfahren ohne Nachaktivierung ist der Restmonomergehalt so hoch, daß eine nachträgliche Entmonomerisierung z.B. durch eine Wasserdampfdestillation erforderlich ist, um den Restmonomergehalt unter geforderte Grenzwerte zu halten und eine Geruchsbelästigung in der Anwendung zu vermeiden. Die Kombination aus einem wasserlöslichen Redoxsystem wie Wasserstoffperoxid und Eisen(II)sulfat und einem in Wasser schwerlöslichen organischen Peroxid wie t-Butylhydroperoxid ist deshalb besonders bevorzugt. In Wasser schwerlöslich soll hier bedeuten, daß weniger als 1 % des organischen Peroxides in Wasser bei Raumtemperatur vollständig löslich sind.

Die Polymerisation kann sowohl im Zulauf- als auch nach einem batch-Verfahren bei Temperaturen zwischen 20 und 100°C, bevorzugt zwischen 60 und 90°C, erfolgen. Die Reaktionszeiten liegen zwischen 0,5 und 10 Stunden, bevorzugt zwischen 1 und 4 Stunden. Die Polymerisation wird bei pH-Werten von 2,5 bis 9, vorzugsweise von 3 bis 6 durchgeführt. Der pH-Wert kann innerhalb des genannten Bereiches mit üblichen Säuren wie Salzsäure, Schwefelsäure, Essigsäure oder mit Basen wie Natronlauge, Kalilauge, Ammoniak oder auch Ammoniumcarbonat eingestellt werden. Eine pH-Einstellung kann z.B. auch im Anschluß an die Polymerisation mit z.B. Natronlauge oder Ammoniak erfolgen.

Die Konzentrationen der fertigen Emulsionspolymerisate betragen zwischen 10 und 40 Gew.-%, bevorzugt zwischen 15 und 30 Gew.-%.

Die Menge an polymerem Emulgator, die bei der Herstellung der erfindungsgemäßen Emulsionspolymerisate zugesetzt wird, liegt zwischen 1 und 20 Gew.-%, bevorzugt zwischen 2 und 15 Gew.-%, besonders bevorzugt zwischen 3 und 10 Gew.-%, bezogen auf die eingesetzte Menge an oxidativ abgebauter Stärke.

Die erfindungsgemäßen wäßrigen Emulsionspolymerisate eignen sich hervorragend als Leimungsmittel für Papier und papierähnliche Materialien. Ein weiterer Gegenstand der vorliegenden Erfindung ist die Verwendung der erfindungsgemäßen Emulsionspolymerisate als Leimungsmittel für Papier und papierähnliche Materialien.

Durch den Zusatz an anionischem polymerem Emulgator erhält man feinteilige wässrige Dispersionen mit Feststoffgehalten zwischen 10 und 40 Gew.-%, die im Vergleich zu Dispersionen, die nur abgebaute Stärke als Pfropfgrundlage enthalten, signifikant verbesserte anwendungstechnische Eigenschaften aufweisen. Die Teilchengrößen dieser Emulsionen liegen zwischen 20 und 200 um, wobei besonders Produkte mit Teilchengrößen zwischen 30 und 150 nm bevorzugt sind.

Die nach dem erfindungsgemäßen Verfahren entstandenen Emulsionen enthalten neben Homo- und/oder Copolymerisaten der zur Polymerisation eingesetzten Monomeren oder Monomergemische auch Anteile von Pfropfprodukten der Monomeren, die auf die abgebaute Stärke sowie die polymeren Emulgatoren als Pfropfsubstrate aufgepfropft sind.

Bei den erfindungsgemäßen Emulsionspolymerisaten handelt es sich um Oberflächenieimungsmittel mit schwach anionischem Charakter und geringer Neigung zur Schaumbildung, die ein breites Anwendungsspektrum besitzen. Sie sind geeignet zur Oberflächenieimung aller in der Praxis hergestellten Papierqualitäten, z.B. von alaunhaltigen, alaunfreien, mit Kaolin oder Kreide gefüllte sowie Holzschliff oder Altpapier enthaltende Rohpapiere, die sowohl sauer als auch neutral oder alkalisch hergestellt sein können und die in der Masse ungeleimt oder auch z.B. mit Alkylketendimer oder Alkenylbernsteinsäureanhydrid vorgeleimt sein können.

Die erfindungsgemäßen Emulsionspolymerisate können mit allen bei der Oberflächenieimung gebräuchlichen Verfahrensmethoden verarbeitet und in der Leimpressenflotte auf die Oberfläche von Papier aufgetragen werden. Üblich ist der Einsatz in z.B. 5 bis 20 %iger wäßriger Lösung zusammen mit Stärke und ggf. Pigmenten und optischem Aufheller in der Leimpresse oder in modernen Auftragsaggregaten wie Filmpresse, Speedsizer oder Gate-roll.

Zusätzlich können die Leimpressenflotten feinteilige Pigmente zur Verbesserung der Bedruckbarkeit enthalten wie z.B. Kreide, gefälltes Calciumcarbonat, Kaolin, Titandioxid, Bariumsulfat oder Gips. Üblich beim Einsatz auf graphischen Papieren ist weiterhin der Zusatz von optischen Aufhellern ggf. unter Zusatz von Carriern wie Polyethylenglykol, Polyvinylalkohol oder Polyvinylpyrrolidon. Besonders vorteilhaft ist die gute Verträglichkeit der erfindungsgemäßen Emulsionspolymerisate mit optischen Aufhellern, so daß Papiere mit hohem Weißgrad erhalten werden können.

Ebenso besonders vorteilhaft ist die Unempfindlichkeit der erfindungsgemäßen Emulsionspolymerisate gegen Zusatz von Elektrolyten wie Na, Ca oder Al-Ionen, die in vielen Fällen in der Leimpressenflotte enthalten sein können oder auch gezielt zur Erhöhung der Leitfähigkeit zugesetzt werden. In vielen Fällen führt der Zusatz von z.B. Calciumchlorid zur Leimpressenflotte sogar zu einer Wirksamkeitssteigerung der erfindungsgemäßen Dispersionen.

Besonders geeignet sind die erfindungsgemäßen Leimungsmittelemulsionen zur Herstellung graphischer Papiere, die für alle üblichen modernen Druckverfahren verwendet werden. Beim Inkjetdruck sind z.B. eine hohe Tintenadsorptionsfähigkeit und eine schnelle Trocknung ohne Durchschlagen gefordert mit gleichzeitig gutem Ink Hold-out und Erhalt einer hohen Farbdichte und einer hohen Auflösung sowie einer guten Wisch- und Wasserfestigkeit. Im Farbdruck ist eine hohe Kantenschärfe gefordert, wobei die einzelnen Farbtinten nicht ineinander verlaufen dürfen und eine hohe Farbstarke, Brillanz und Lichtechtheit aufweisen sollen. Diese Anforderungen können durch die erfindungsgemäßen Emulsionen in hervorragender Weise erfüllt werden.

Für den Einsatz der mit den erfindungsgemäßen Emulsionen ausgerüsteten Papiere bei elektrophotographischen Druckverfahren wie in Laserdruckern und Kopiergeräten ist gleichzeitig eine gute Toneradhäsion gefordert, d.h. der Toner muß mit hoher Wischfestigkeit auf dem Papier haften. Diese Forderung kann durch den Einsatz der erfindungsgemäßen Emulsionen auf z.B. mit Alkyldiketen vorgeleimten Papieren in hervorragender Weise erfüllt werden.

## Beispiele

### Herstellung des polymeren Emulgators A:

In einem 61-Stanlautoklaven wird ein Gemisch aus 546 g eines alternierenden Maleinsäureanhydrid/Diisobutylen-Copolymerisats mit einem Gewichtsmittelmolekulargewicht von ca. 11.000 g/Mol, 1.506 g einer 25%igen wässrigen Lösung von Na-Taurinat sowie 2.342 g elektrolytfreies Wasser vorgelegt. Nach 3-maligem Spülen mit Stickstoff wird der Autoklav verschlossen und unter Rühren 10 Stunden auf 100°C erhitzt. Danach erhöht man die Temperatur auf 140°C und rührt weitere 10 Stunden. Nach dem Abkühlen auf Raumtemperatur erhält man eine klare wässrige Lösung des polymeren Emulgators A mit einem Feststoffgehalt von 20%.

### Herstellung des polymeren Emulgators B:

600 g eines Terpolymerisats mit der Zusammensetzung 68 Gew.-% Styrol, 25 Gew.-% Maleinsäureanhydrid

und 7 Gew.-% Methylmethacrylat werden zusammen mit 900 g einer 25%igen wässrigen Lösung von Na-Taurinat und 3.656 g entionisiertem Wasser in einem 6 l-Edelstahlautoklaven unter Rühren auf 100°C erhitzt. Nach 10-stundigem Rühren bei 100°C wird die Temperatur auf 140°C angehoben, und es wird noch weitere 10 Stunden gerührt. Nach Abkühlen auf Raumtemperatur erhält man eine 16%ige wässrige Lösung des polymeren Emulgators B.

<u>Herstellung des polymeren Emulgators C auf Basis Von Oligourethanen:</u>

170 g eines Polyesters aus Adipinsäure, Neopentylglykol und Hexandiol-1,6 (Molverhältnis 4:7), mit einer Hydroxylzahl von 65,9, werden mit 160 g eines Polyisocyanats, das durch Trimerisierung der NCO-Gruppen von Hexamethylendiisocyanat entstanden ist und einen NCO-Gehalt von 21% aufweist, vermischt. Es wird auf 90-100°C aufgeheizt und so lange nachgerührt, bis der theoretische NCO-Gehalt von 7,6% erreicht oder leicht unterschritten ist. Das entstandene Vorpolymerisat wird nun mit 330 g Aceton verdünnt und auf Raumtemperatur abgekühlt.

75 g Amninoethansulfonsäure werden in 250 g Wasser gelöst, mit 50,5 g Triethylamin versalzt und anschließend mit 125 g Aceton verdünnt. Es wird so lange bei 40-50°C gerührt, bis eine klare Lösung entstanden ist.

Zu dieser Aminlösung wird bei gleicher Temperatur innerhalb einer Stunde die Vorpolymerlösung zugegeben und nach 15 Minuten Nachrührzeit mit 433 g Wasser dispergiert. Anschließend wird das Aceton abdestilliert. Man erhält eine wassrige Dispersion mit ca. 40% Feststoffgehalt.

<u>Herstellung des polymeren Emulgators D auf Basis von Oligourethanen:</u>

35.8 g eines Kondensats aus 1 Mol Adipinsäure und 2 Mol Diethylenglykol (OH-Zahl: 312,9) werden mit 160 g des unter C genannten Polyisocyanates und 105,0 g eines mono- OH-funktionellen Polyglykols mit dem mittleren Molekulargewicht von 350 vermischt. Es wird auf 90-100°C aufgeheizt und solange nachgerührt bis der theoretische NCO-Gehalt von 3,8 % erreicht ist.

Es wird wie unter Polymerer Emulgator C beschrieben weiterverfahren, jedoch werden anstatt 75 g Taurin entsprechend des Rest-NCO-Gehalts 37,5 g Taurin mit 20,3 g Triethylarnin versalzt.

Nach der destillativen Aufarbeitung erhält man eine 40 %ige wäßrige Dispersion.

<u>Herstellung des Leimungsmittels I</u>

In einem 1 l-Dreihalskolben löst man unter Rühren 76,8 g einer oxidierten Kartoffelstarke (Perfectamyl® A 4692) in 600 g entionisiertem Wasser durch Erwärmen auf 85°C. Nach Auflösung der Starke werden 2,4 g einer 35%igen WasserstoftperoxidLösung und 26,8 g einer 1%igen wässrigen Lösung von $FeSO_4 \cdot 7H_2O$ zugegeben und 30 Minuten bei 85°C gerührt.

Danach gibt man zu dieser Lösung 24,45 g einer 20%igen Lösung des polymeren Emulgators A und dosiert gleichzeitig aus zwei getrennten Vorratsgefäßen die Lösungen 1 und 2 innerhalb von 90 Minuten:

| | |
|---|---|
| <u>Lösung 1:</u> | 81,6 g n-Butylacrylat |
| | 81,6 g Styrol |
| <u>Lösung 2:</u> | 3,8 g Wasserstoffperoxid-Lösung (35%ig) |
| | 106,7 g entionisiertes Wasser |

Nach Beendigung der Dosierung wird noch 20 Minuten bei 85°C nachgerührt, bevor 0,7 g t-Butylhydroperoxid zugegeben wird.

Nach weiteren 2 Stunden Rühren bei 85°C wird auf Raumtemperatur abgekühlt und über ein 100 µm-Filter abfiltriert.

Feststoffgehalt: 24,0%
mittlere Teilchengröße: 198 nm (bestimmt durch Laser-Korrelations-Spektroskopie)

<u>Herstellung des Leimungsmittels II</u>

Die Herstellung des Leimungsmittels II erfolgte auf dieselbe Art wie die des Leimungsmittels I mit dem Unterschied, daß als Dosierung 1 ein Monomergemisch aus 81,6 g n-Butylacrylat und 81,6 g Acrylnitril verwendet wurde.

Feststoffgehalt: 23,7%
mittlere Teilchengröße: 135 nm (bestimmt durch Laser-Korrelations-Spektroskopie)

**Herstellung des Leimungsmittels III**

Zu einer Lösung aus 76,8 g oxidierter Kartoffelstärke (Perfectamyl® A 4692) in 600 g entionisiertem Wasser gibt man bei 85°C 2,4 g einer 35%igen Wasserstoffperoxid lösung sowie 26,8 g einer 1 %igen wässrigen Lösung von $FeSO_4 \cdot 7H_2O$ und rührt 30 Minuten bei 85°C.

Danach werden 20,5 g einer 16%igen wässrigen Lösung des polymeren Emulgators B zugegeben und die Lösungen 1 und 2 gleichzeitig aus getrennten Vorratsgefäßen innerhalb von 90 Minuten zudosiert:

Lösung 1: 81,6 g n-Butylacrylat
81,6 g Acrylnitril

Lösung 2: 3,8 g Wasserstoffperoxid-Lösung (35%ig)
120,1 g entionisiertes Wasser

Nach Dosierende wird noch 2 Stunden bei 85°C nachgerührt und danach mit 0,7 g t-Butylhydroperoxid nachaktiviert. Nach 2-stündigem Nachrühren bei 85°C wird auf Raumtemperatur abgekühlt. Nach Verdünnen mit Wasser erhält man eine Leimungsmitteldispersion mit einem Feststoffgehalt von 20,8% und einer mittleren Teilchengröße von 93 nm (bestimmt durch Laser-Korrelations-Spektroskopie).

**Herstellung des Leimungsmittels IV**

In einem 2 l-Dreihalskolben mit Rückflußkühler löst man unter Rühren 40,0 g einer oxidierten Kartoffelstärke (Perfectamyl A® 4692) in 603 g entionisiertem Wasser unter Erwärmen auf 85°C. Man gibt hintereinander 26,8 g einer 1 %igen wässrigen Lösung von $FeSO_4 \cdot 7H_2O$ und 2,0 g 35 %iges wäßriges Wasserstoffperoxid zu. Nach 30 Minuten ist der Starkeabbau beendet, und man fügt nun 10 g einer 40 %igen Dispersion des polymeren Emulgators D zu. Bei 85°C werden nun im getrennten Zulauf die Monomere und der Initiator innerhalb von 90 Minuten dosiert:

Lösung 1: 100 g Acrylnitril
100 g n-Butylacrylat

Lösung 2: 4,8 g Wasserstoffperoxid (35 %, wäßrig)
127 g Wasser

20 Minuten nach Ende der Dosierung werden noch 0,7 g tert.-Butylhydroperoxid zugesetzt und weitere 2h bei 85°C gerührt.

Danach wird auf Raumtemperatur abgekühlt und filtriert.

Man erhält eine stabile Polymerdispersion mit einem Feststoffgehalt von 24,4 % und einer mittleren Teilchengröße (Laser-Korrelations-Spektroskopie) von 97 nm.

**Herstellung des Leimungsmittels V (Vergleichsbeispiel)**

Es wird wie unter IV verfahren, lediglich auf die Zugabe des polymeren Emulgators nach dem Stärkeabbau wird verzichtet.

Nach der Filtration über ein 100 µm-Tuch erhält man eine stabile Polymerdispersion mit einem Feststoffgehalt von 23,8% und einer mittleren Teilchengröße von 131 nm.

**Anwendungsbeispiele**

Die Leimungswirkung der erfindungsgemäßen Leimungsmittel wurde auf kreidehaltigem Papier mit einer Naßaufnahme von 95% und einer flächenbezogenen Masse von 80 $g/m^2$ geprüft.

Die Leimung des Papiers erfolgte auf einer Laborleimpresse der Firma Mathis, Zürich, Schweiz, Type HF. Als Leimungsflotte wurde eine Lösung aus 5 Gew.Teilen oxidierter Kartoffelstarke Perfectamyl® A 4692 und 0,375 Gew.-Teilen des zu prüfenden Leimungsmittels verwendet, die mit Wasser bis auf 100 Teile ergänzt wurde. Die Trocknung der oberflächengeleimten Papiere erfolgte auf einem Trockenzylinder innerhalb einer Minute bei ca. 100°C. Vor der Leimungsprüfüng wurden die Papiere 2 Stunden bei Raumtemperatur klimatisiert.

Zur Beurteilung des Leimungsgrades der obeflächengeleimten Papiere wurden die Cobb-Werte nach DIN 53 122 bestimmt. Als Cobb-Werte definiert ist die Wasseraufnahme innerhalb einer Benetzungszeit von 60 sec. angegeben in $g/m^2$. Je niedriger der Cobb-Wert, desto besser ist der Leimungsgrad.

Zur Bestimmung der Salzstabilitat der erfindungsgemäßen Leimungsmittelemulsionen wurde zur Leimungsflotte, bestehend aus 5% Stärke Perfectamy® A 4692 und dem zu prüfenden Leimungsmittel, 0,5% $CaCl_2$ hinzugefügt und auf 70°C erwärmt. Durch eine visuelle Beurteilung wurde festgestellt ob eine Sedimentbildung auftrat.

Zur Messung des Schaumverhaltens werden 0,375 Gew.-% Wirksubstanz des zu untersuchenden Leimungsmittels in einer Leimungsflotte aus 5 Gew.-% oxidierter Kartoffelstärke (Perfectamyl® A 4692) gelöst und auf 60°C erwärmt. 200 ml dieser Leimungsflotte werden aus einem Aluminiumgefäß, das an seiner Unterseite eine kreisförmige Öffnung von 4 mm Durchmesser (Ford-Becher) besitzt, aus einer Höhe von 60 cm in ein graduiertes Becherglas im freien Fall geleitet. Das Volumen in ml des sich über der Flüssigkeitsoberfläche bildenden Schaumes wird einmal sofort sowie nach 1-minütigem Stehen an der Luft bestimmt. Der erste Wert gibt dabei Aufschluß über die Schaumbildungstendenz des Leimungsmittels und der zweite Wert über die Geschwindigkeit des Schaumabbaus bzw. über die Stabilität des Schaums.

In der nachfolgenden Tabelle 1 sind die anwendungstechnischen Messergebnisse, die mit den Leimungsmitteln I-III erhalten wurden, zusammengestellt:

Tabelle 1

| Leimungsmittel | Cobb-Wert (60") [g/m$^2$] | Ca-Stabilität | Cobb-Wert (60") n. Zusatz v. 0,5% $CaCl_2$ | Schaumvolumen in [ml] | |
|---|---|---|---|---|---|
| | | | | sofort | nach 1 Minute |
| I | 23,3 | kein Sediment | 20,3 | 70 | 30 |
| II | 20,1 | kein Sediment | 18,1 | 90 | 60 |
| III | 18,9 | kein Sediment | 18,6 | 100 | 40 |

Tabelle 2 gibt die Cobb 60-Werte wieder, die mit dem Leimungsmittel IV und dem Vergleichsprodukt V auf kreidehaltigem Papier gemessen wurden. Dabei erkennt man deutlich, daß das erfindungsgemäße Leimungsmittel IV gegenüber dem Vergleichsprodukt V eine wesentlich bessere Leimungswirkung ergibt.

Tabelle 2

| Leimungsmittel | IV | | | V | | |
|---|---|---|---|---|---|---|
| Einsatz (fest, %) | 0,15 | 0,20 | 0,25 | 0,15 | 0,20 | 0,25 |
| Cobb 60 [g/m$^2$] | 22,9 | 21,8 | 19,7 | 28,0 | 23,1 | 21,0 |

Auch die Dispersionen IV und V sind mit 0,5 % $CaCl_2$ bei 70°C salzstabil und behalten danach ihre Leimungswirkung.

**Patentansprüche**

1. Wäßrige Emulsionspolymerisate, erhältlich durch radikalisch initiierte Polymerisation von mindestens einem Monomeren in Gegenwart von abgebauter Stärke und mindestens einem polymeren Emulgator aus der Reihe der sulfonsäuregrupperhaltigen Maleinsäureanhydrid-Co- und/oder Terpolymerisate und/oder der sulfonsäuregruppenhaltigen Oligourethane mit verzweigter Molekülstruktur.

2. Waßrige Emulsionspoymerisate gemaß Anspruch 1, dadurch gekennzeichnet, daß als Monomere ein Gemisch aus

   A.) 5 bis 95 Gew.-% mindestens eines Monomeren aus der Reihe Acrylnitril, Methacrylnitril, Carbonsäurevinylester oder eines ungesättigten copolymerisierbaren aliphatischen oder aromatischen Kohlenwasserstoffs und

   B.) 5 bis 95 Gew.-% Acryl- und/oder Methacrylsäureester
   eingesetzt wird.

3. Emulsionspolymerisate gemäß Ansprüchen 1 und 2, dadurch gekennzeichnet, daß als Monomere A) Acrylnitril

und B) n-Butylacrylat und/oder t-Butyl-acrylat eingesetzt werden.

4. Emulsionspolymerisate gemuß Ansprüchen 1 und 2, dadurch gekennzeichnet, daß als Monomere A) Styrol und B) n-Butylacrylat und/oder tert.-Butylacetat eingesetzt werden.

5. Emulsionspolymerisate gemuß Ansprüchen 1 bis 4, dadurch gekennzeichnet, daß als polymerer Emulgator aus der Reihe der Sulfonsäuregruppen-haltigen Maleinsäureanhydrid-Co- und/oder -Terpolymerisate mindestens eine Verbindung der Formel (I)

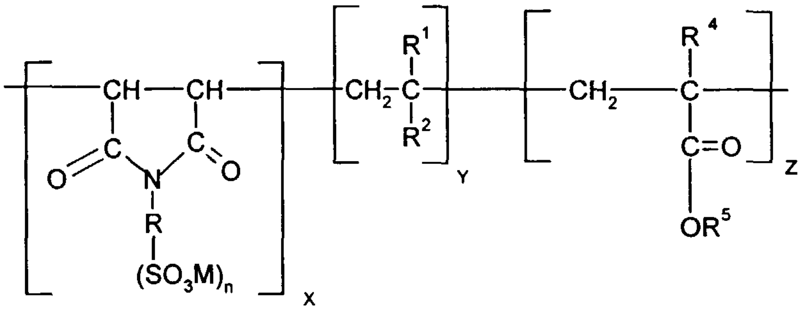
(I)

worin

| | |
|---|---|
| M | für einen kationbildenden Rest steht, |
| n | für 1 oder 2 steht, |
| R | für einen aliphatischen Rest mit 1 bis 10 C-Atomen oder einen aromatischen Rest mit 6 bis 10 C-Atomen steht, |
| $R^1$ | für H oder $CH_3$ steht, |
| $R^2$ | für H, $C_1$-$C_6$-Alkyl oder Phenyl steht, |
| $R^4$ | für H oder $CH_3$ steht, |
| $R^5$ | für $CH_3$ oder $C_2H_5$ steht, und |
| x,y,z | so gewählt werden, daß das gewichtsmittlere Molekulargewicht ($\overline{M}_w$) der Polymerisate (I) 5 000 bis 500 000, beträgt und das Verhältnis von x:y:z = 1:1:0 bis 1:3:0,5 ist, |

eingesetzt wird.

6. Emulsionspolymerisate gemaß Ansprüchen 1 bis 4, dadurch gekennzeichnet, daß als polymere Emulgatoren auf Basis von Sulfonsäuregruppen-haltigen Oligourethanen mit verzweigter Molekülstruktur solche eingesetzt werden, die im statistischen Mittel pro Molekül mindestens 2,2 endständige Sulfonsäuregruppen aufweisen und ein mittleres Molekulargewicht von unter 30 000 aufweisen und die erhältlich sind durch Umsetzung von

a) organische Polyisocyanate,

b) organische Verbindungen mit gegenüber Isocyanatgruppen reaktionsfähigen Gruppen des Molekulargewichtsbereiches 60 bis 10 000 und

c) Aufbaukomponenten mit Sulfonsäuregruppen bzw. deren Salze.

7. Emulsionspolymerisate gemäß Ansprüchen 1 bis 6, dadurch gekennzeichnet, daß sie in Form kolloiddisperser Lösungen mit mittleren Teilchengrößen von 20 bis 200 nm vorliegen.

8. Emulsionspolymerisate gemäß Ansprüchen 1 bis 7, dadurch gekennzeichneL daß man als abgebaute Stärke oxidativ abgebaute Kartoffelstärke verwendet.

9. Verwendung der Emulsionspolymerisate gemäß einem oder mehreren der Ansprüche 1 bis 8 zur Oberflächenleimung von Papier, Pappe und Karton.

10. Verfahren zur Herstellung der Emulsionspolymerisate gemäß Ansprüchen 1 bis 8, dadurch gekennzeichnet, daß man eine Mischung aus abgebauter Stärke und mindestens einem polymeren Emulgator aus der Reihe der Sulfonsäuregruppen-haltigen Maleinsäurearthydrid-Co- und/oder -Terpolymerisate und/oder der Sulfonsäuregruppen-haltigen Oligourethane mit mindestens einem Monomer in Gegenwart eines wasserlöslichen Redoxsystems bis zu einem Umsatz von ca. 95 % polymerisiert und anschließend in Gegenwart eines in Wasser schwerlöslichen organischen Peroxids die Polymerisation zu Ende führt.

11. Verfahren gemaß Anspruch 10, dadurch gekennzeichnet, daß als wasserlösliches Redoxsystem Wasserstoffperoxid und ein Eisen(II)salz verwendet wird.

12. Maleinsäureanhydrid-Terpolymerisate der Formel

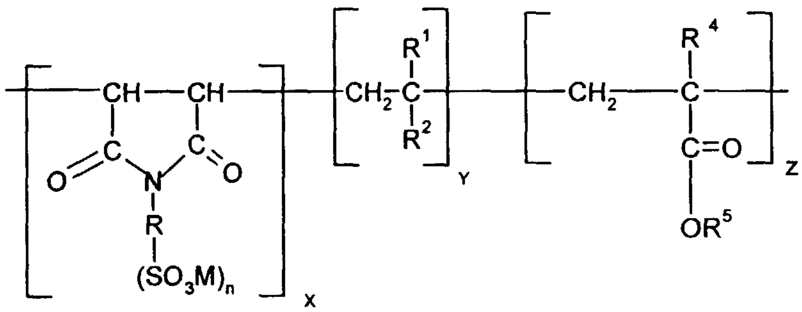

(I)

worin

M für einen kationbildenden Rest steht,

n für 1 oder 2 steht,

R für einen aliphatischen Rest mit 1 bis 10 C-Atomen oder einen aromatischen Rest mit 6 bis 10 C-Atomen steht,

$R^1$ für H oder $CH_3$

$R^2$ für H, $C_1$-$C_6$-Alkyl oder Phenyl steht,

$R^4$ für H oder $CH_3$ steht,

$R^5$ für $CH_3$ oder $C_2H_5$ steht, und

x,y,z so gewählt werden, daß das gewichtsmittlere Molekulargewicht ($\overline{M}_w$) der Polymerisate (I) 5 000 bis 500 000, vorzugsweise 10 000 bis 200 000 beträgt und das Verhältnis von x:y:z = 1:1:0,1 bis 1:3:0,5 beträgt.

Europäisches Patentamt

# EUROPÄISCHER RECHERCHENBERICHT

Nummer der Anmeldung
EP 98 12 3210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | GB 1 466 064 A (J. FERGUSON & SONS LTD.) 2. März 1977 * Ansprüche 1,12 * | 1 | C08F2/24 C08F251/00 C08F222/40 D21H17/34 |
| D,A | EP 0 400 410 A (BAYER) 5. Dezember 1990 | | |
| D,A | EP 0 257 412 A (BASF) 2. März 1988 | | |
| A | EP 0 029 970 A (UNIROYAL) 10. Juni 1981 | | |
| D,A | EP 0 331 066 A (BAYER) 6. September 1989 | | |

RECHERCHIERTE SACHGEBIETE (Int.Cl.6)
C08F

Der vorliegende Recherchenbericht wurde für alle Patentansprüche erstellt

| Recherchenort | Abschlußdatum der Recherche | Prüfer |
|---|---|---|
| DEN HAAG | 12. Februar 1999 | Cauwenberg, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 98 12 3210

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-1999

| Im Recherchenbericht angeführtes Patentdokument | Datum der Veröffentlichung | Mitglied(er) der Patentfamilie | Datum der Veröffentlichung |
|---|---|---|---|
| GB 1466064 A | 02-03-1977 | KEINE | |
| EP 400410 A | 05-12-1990 | DE 3917647 A | 06-12-1990 |
| | | DE 59008824 D | 11-05-1995 |
| | | JP 3024106 A | 01-02-1991 |
| EP 257412 A | 02-03-1988 | DE 3627594 A | 18-02-1988 |
| | | AU 594492 B | 08-03-1990 |
| | | AU 7685587 A | 18-02-1988 |
| | | CA 1294721 A | 21-01-1992 |
| | | DK 422187 A | 15-02-1988 |
| | | ES 2018508 T | 16-04-1991 |
| | | FI 873236 A,B | 15-02-1988 |
| | | JP 2518858 B | 31-07-1996 |
| | | JP 63050596 A | 03-03-1988 |
| | | KR 9603432 B | 13-03-1996 |
| | | US 4855343 A | 08-08-1989 |
| EP 29970 A | 10-06-1981 | US 4319014 A | 09-03-1982 |
| | | CA 1138890 A | 04-01-1983 |
| | | JP 1247870 C | 16-01-1985 |
| | | JP 56092903 A | 28-07-1981 |
| | | JP 59023722 B | 04-06-1984 |
| EP 331066 A | 06-09-1989 | DE 3807097 A | 14-09-1989 |
| | | DE 58906329 D | 20-01-1994 |
| | | JP 2006509 A | 10-01-1990 |
| | | US 4931510 A | 05-06-1990 |
| | | US 5013794 A | 07-05-1991 |

EPO FORM P0461

Für nähere Einzelheiten zu diesem Anhang : siehe Amtsblatt des Europäischen Patentamts, Nr.12/82